# FASCICULE DE BREVET EUROPEEN

(11) **EP 4 107 443 B1**
(45) Date de publication et mention de la délivrance du brevet: **24.04.2024**
(21) Numéro de dépôt: 21707381.6
(22) Date de dépôt: 16.02.2021
(51) Int. Cl.: F24S 20/40, E04D 11/00, F24S 20/67, F24S 60/00, F28D 5/00, F24D 11/02, F24D 17/02, F24D 3/18

(54) **SYSTÈME D'ÉCHANGE THERMIQUE POUR LA RÉGULATION THERMIQUE D'UN BÂTIMENT**
WÄRMEAUSTAUSCHSYSTEM ZUR THERMISCHEN REGELUNG EINES GEBÄUDES
HEAT EXCHANGE SYSTEM FOR THE THERMAL REGULATION OF A BUILDING

(30) Priorité: 20.02.2020 CH 1982020
(43) Date de publication de la demande: 28.12.2022
(73) Titulaire: Siegenthaler, Andy, 1400 Yverdon-les-Bains (CH)
(72) Inventeur: Siegenthaler, Andy, 1400 Yverdon-les-Bains (CH)
(74) Mandataire: P&TS SA (AG, Ltd.)
(86) Numéro de dépôt international: PCT/IB2021/051286
(87) Numéro de publication internationale: WO 2021/165824

(56) Documents cités:
- EP-A2- 0 053 746
- WO-A1-2011/117437
- GB-A- 2 516 260
- US-A1- 2007 199 341
- US-A1- 2012 260 572
- DATABASE WPI Section PQ, Week 200349 Thomson Scientific, London, GB; Class Q43, AN 2003-515607 XP002799477, -& ES 2 186 455 A1 (GOMEZ PORTELA J) 1 mai 2003 (2003-05-01)

## Description

### Domaine technique

La présente invention concerne un système d'échange thermique permettant la régulation de la température à l'intérieur d'un bâtiment. Le système d'échange thermique exploite en particulier les apports et les dissipations de chaleur dus à la condensation et l'évaporation de l'eau. Des modes de réalisation concernent, parmi d'autres réalisations possibles, une toiture végétalisée pour un bâtiment qui intègre un circuit échangeur de chaleur. L'invention peut être appliquée à des installations fonctionnant en mode monovalent, soit uniquement avec des énergies renouvelables, ou combinée à une installation thermique traditionnelle en mode bivalent. Elle permet de chauffer l'intérieur du bâtiment, de le refroidir, et de combiner les modes de chauffage et de refroidissement.

### Etat de la technique

Les systèmes de chauffage à pompe à chaleur (PAC) permettent de transférer de l'énergie thermique d'un milieu à basse température vers un milieu à haute température. Les pompes à chaleur sont de plus en plus utilisées pour le chauffage des bâtiments et pour la génération d'eau chaude, en vertu de leur efficacité énergétique supérieure. Pour son fonctionnement, la pompe à chaleur est tributaire d'une source froide qui peut être une sonde géothermique, ou simplement l'atmosphère, entre autres.

Les systèmes géothermiques, tels que les sondes verticales et les captages plans, sont connus pour permettre de réguler la température interne des bâtiments en faisant circuler un fluide caloporteur dans le sous-sol. Les systèmes à sondes verticales exploitent essentiellement l'inertie thermique des couches profondes du sous-sol parfois à plusieurs centaines de mètres de profondeur, qui permet d'y puiser l'énergie résiduelle lors des variations des températures extérieures et sont souvent utilisés comme source froide pour des systèmes de chauffage à une pompe à chaleur. Ils présentent cependant l'inconvénient d'une longévité limitée, notamment du fait des échanges thermiques qui tendent à diminuer l'énergie récupérable au cours du temps, en raison notamment d'un apport en énergie géothermique trop faible pour garder la température à la source constante. Les installations géothermiques à captage plan demandent par ailleurs d'enterrer les circuits de fluide caloporteur à des profondeurs suffisantes pour éviter les variations de températures saisonnières, et notamment le gel. Des profondeurs d'enfouissement sont en général de 1 mètre ou plus, ce qui demande des efforts d'installation non négligeables. De plus, l'utilisation de systèmes géothermiques réclame des zones étendues et libres, ce qui peut se révéler difficile voire impossible en zone urbaine, par manque d'espace, et de sous-sols encombrés par des conduites ou des nappes phréatiques. Il en résulte que les systèmes de chauffage traditionnels sont maintenus, parfois malgré leur coût d'exploitation élevé et leur détriment vis-à-vis de l'environnement.

Lorsque les sources thermiques géothermiques ne sont pas disponibles, les pompes à chaleur peuvent utiliser l'atmosphère comme source froide, par l'intermédiaire d'un échangeur de chaleur. Ces solutions aérothermiques sont relativement répandues dans les régions à climat tempéré, mais leurs performances énergétiques sont inférieures, et se réduisent davantage lorsque les températures extérieures diminuent. De surcroît, l'échange de chaleur aérothermique nécessite une ventilation forcée coûteuse et bruyante, ce qui limite la performance énergétique et son utilisation en milieu urbain.

On connaît aussi des installations dans lesquelles l'énergie thermique captée par des collecteurs solaires est stockée dans des volumineux accumulateurs d'eau chaude lorsque l'ensoleillement direct est suffisant, et utilisées pour chauffer un bâtiment ou produire de l'eau chaude, le plus souvent par le biais d'une pompe à chaleur utilisant le réservoir comme source froide. Ces solutions nécessitent toutefois d'imposantes cuves d'accumulation isolés thermiquement, chères et encombrantes. Les collecteurs solaires sont également interdépendants des températures extérieures et ne permettent pas directement de refroidir en été.
Le document GB2516260 divulgue un toit couvert par une couche herbeuse avec un circuit pour le captage de chaleur.

Il y a donc matière à développer des systèmes d'échange thermique simples, énergétiquement efficients qui permettent la récupération de chaleur de manière renouvelable, tout en étant respectueux de l'environnement et particulièrement adaptés aux zones urbaines, et toutes celles où l'implantation d'autres systèmes énergétiquement efficients est impossible.

### Bref résumé de l'invention

La présente invention propose un système d'échange thermique limitant les inconvénients discutés ci-dessus.

En particulier le système d'échange thermique selon la présente invention comprend un volume d'échange disposé sur une surface extérieure approximativement horizontale superposée ou adjacente du bâtiment, par exemple sur un toit du bâtiment, un dispositif de diffusion thermique comportant au moins un réseau de captage intégré au volume d'échange, par exemple un circuit hydraulique dans lequel on fait circuler de l'eau glycolée, ou un autre fluide idoine, pour capter la chaleur du système d'échange thermique. De manière importante, le volume d'échange comporte un substrat de texture poreuse et/ou mésoporeuse et/ou microporeuse, permettant de retenir l'eau et sa surface externe en contact avec l'atmosphère, ainsi qu'une couche végétalisée couverte d'une végétation de type muscinal.

Les termes "micropore" et "microporeux", ainsi que mésopore" ou "mésoporeux" désignent des cavités dont la taille est suffisamment petite pour empêcher la circulation de l'eau par gravité ou par mouvements convectifs mais encore suffisant pour que le plantes puissent profiter de l'eau y contenue. Numériquement on peut considérer que les micropores ont une taille entre 5 µm et 30 µm, tandis que les tailles des mésopores se situent entre 30 µm et 75 µm, mais ces limites numériques ne sont pas précises. Les "macropores", dont la taille est approximativement supérieure aux 75 µm, sont trop grands pour donner lieu à des forces capillaires significatives et ont une capacité de rétention d'eau très limitée.

L'avantage d'une végétation de type muscinal provient de sa surface totale d'échange très développée et active. Les échanges thermiques avec l'environnement sont principalement dus à la condensation/évaporation de l'eau (et en moindre mesure à la solidification/liquéfaction et à la sublimation/gazéification). Ceci permet des apports d'énergie latente très importants en hiver, ainsi que des pertes par évapotranspiration en été. Ces apports latents, ensembles avec les apports en énergie solaire (rayonnements directes et indirectes) et sensibles (air, précipitations et bâtiment), ainsi qu'un stockage d'énergie suffisamment important dans un substrat humide, permettent de faire de la récupération efficace.

Contrairement aux captages plans plus profonds de jardin, le système de l'invention se trouve nettement plus proche de la surface du substrat et peut ainsi bénéficier d'autres apports, tels que les rayonnements solaires et la conduction d'énergie sensible (air, précipitation et bâtiment), qui permettent de recharger le système dans un cycle nycthéméral. Inversement aux collecteurs solaires thermiques, le système permet une meilleure récupération des rayonnements solaires indirects lors de journées couvertes. En été, les températures élevées de l'air et de la surface permettent une évaporation qui s'accompagne d'une transpiration accrue des plantes, qui avantageusement, dans le cas de plantes muscinales, ne possèdent pas de stomates pour réguler leur perte en eau.

Préférablement, le substrat du système de captage de l'invention est au moins partiellement saturé en eau et comporte une partie non saturée, ainsi qu'une partie saturée sous-jacente à la partie non saturée. En gardant une partie du substrat constamment saturée d'eau on améliore la capacité thermique de stockage sans trop perdre de chaleur par convection. En effet, la nature poreuse du substrat empêche le transfert d'énergie thermique engendré par des mouvements de convection d'eau. Ce substrat permet donc un stockage qui est découplé des besoins thermiques et permet une récupération d'énergie de type eau/eau, ce qui est associé avec des efficiences supérieures au type sol/eau ou air/eau. Il est préférable d'utiliser un substrat organique (naturel ou synthétique) avec une faible conductivité thermique, léger (préférablement présentant un poids saturé < 900 kg/m³), et imputrescible.

Le système de captage est préférablement connecté à une pompe de circulation et/ou à une pompe à chaleur permettant un captage efficace de l'énergie stockée. Une variante de l'invention peut fonctionner aussi en un mode "free-cooling" dans lequel le fluide contenu dans le système de captage est utilisé (directement ou par l'intermédiaire d'un échangeur de chaleur) pour refroidir le bâtiment sans passer par la pompe à chaleur.

Préférablement, l'invention comporte un ou plusieurs capteurs permettant de déterminer un ou plusieurs paramètres environnementaux tels que température, humidité, etc. et une unité de commande permettant de traiter les données recueillies et de piloter le fonctionnement du système d'échange thermique.

Afin de pouvoir faire face à des conditions météorologiques défavorables, par exemple de basses températures ou de précipitations abondantes, le système de l'invention est conçu pour ne pas solliciter défavorablement la structure du bâtiment en cas de gel. Cela peut se faire entre autres par une ou plusieurs zones d'amortissement comportant des éléments déformables, aptes à absorber l'expansion de la glace sans la communiquer à la structure du bâtiment. Pour une plus grande sécurité, le système peut être équipé d'un trop-plein pour évacuer l'eau excédentaire, et le volume d'échange peut être entouré par un parapet disposé à la périphérie du volume d'échange dont la hauteur surpasse celle du volume d'échange de manière à le contenir, fixé sur le bâtiment depuis sa périphérie extérieure, de sorte à pouvoir être aisément remplacé ou réparé.

La couche végétalisée est de type muscinal. Elle regroupe en particulier les espèces végétales telles que les mousses, les lichens et autres espèces associées. La couche muscinale inclut les variétés ou espèces végétales non muscinales connues pour être souvent présentes avec les variétés muscinales ou vivant en relation avec elles de manière à satisfaire un écosystème stable et pérenne. La couche végétalisée est sélectionnée de telle sorte à favoriser l'évaporation de l'eau notamment grâce à la transpiration des espèces végétales utilisées. Une couche végétalisée muscinale est particulièrement adaptée à l'évaporation du fait de l'absence de stomates qui caractérise de telles espèces. D'autre part, une telle couche est composée d'une infinité de ramifications foliaires qui représente une très grande surface totale de condensation. Un autre avantage de ces espèces végétales est l'absence de système racinaire qui pourrait déranger les gradients thermiques dans le volume d'échange et créer des ponts thermiques indésirables entre la surface et les couches profondes. Cette absence de racines permet également de mieux préserver la couche d'étanchéité du bâtiment. Les plantes muscinales présentent une excellente résistance à la dessication et au gel, ainsi qu'un albédo plus avantageux que les revêtements en bitume ou en gravier.

La hauteur relative des parties saturées et non saturées du substrat dépend des besoins en vitesse d'évaporation, de durée de régulation thermique ou d'autres facteurs. En particulier, il importe que le gradient d'humidité dans la partie supérieure du substrat puisse être maintenu relativement constant, en maintenant une humidité suffisante de la couche végétalisée pour la maintenir active.

Etant donné, la légèreté et la hauteur réduite du substrat, les circuits de captage sont préférablement arrimés à une structure élastique pour pouvoir gérer la conduction et la dilatation thermique. Cette structure peut être réalisée par une armature flexible plate posée sur une couche de feutre résistant aux torsions, cisaillements et perforations. Ce feutre de protection d'au moins 5 mm a la double fonction de retenir l'eau et de protéger les couches d'étanchéité sous-jacente. Les conditions dans la zone saturée du substrat sont: taux d'humidité proche de la saturation, concentration d'oxygène réduite et pH acido-basique. L'armature est préférablement réalisée par des matériaux aptes à tolérer cet environnement. Plusieurs matériaux plastiques et certaines essences de bois ou de bambous sont utilisables pour cette application. Toutefois, la plupart des métaux utilisés dans le domaine de la construction peuvent libérer des éléments toxiques pour la végétation muscinale.

La présente invention est particulièrement adaptée aux dispositions urbaines, facilitant la mise en oeuvre de dispositifs économiques et écologiques. Outre la régulation thermique d'un bâtiment, l'invention permet également une végétalisation basse peu coûteuse à l'entretien, et qui peut se conjuguer avec l'installation d'autres dispositifs de récupération d'énergie renouvelable comme des panneaux photovoltaïques ou de collecteurs thermiques. La présente invention permet également d'assurer des services écologiques tels que : la séquestration du CO₂ atmosphérique, la diversification écologique, la rétention et la diminution de d'écoulement d'eau, la protection thermique et phonique, la régulation micro-climatique et l'esthétisme environnant.

### Brève description des figures

Des exemples de mise en oeuvre de l'invention sont indiqués dans la description illustrée par les figures annexées :
- Figure 1a : vue schématique de dessus d'un système de régulation thermique selon l'invention
- Figure 1b : vue schématique en coupe latérale de la connexion des conduites de captage au réseau externe
- Figure 2 : Vue schématique en coupe d'un système de régulation thermique selon l'invention
- Figure 3 : Détail en coupe d'une évacuation d'eau selon un mode de réalisation de l'invention
- Figures 4a et 4b : schéma de fonctionnement de l'invention selon un mode de réalisation en free-cooling, respectivement avec une pompe à chaleur pour le chauffage et/ou la production d'eau chaude sanitaire.
- Figure 5 : vue schématique en coupe d'une zone d'amortissement de la présente invention
- Figure 6 : vue en coupe latérale du système de régulation thermique et hydrique selon l'invention

### Exemple(s) de mode de réalisation de l'invention

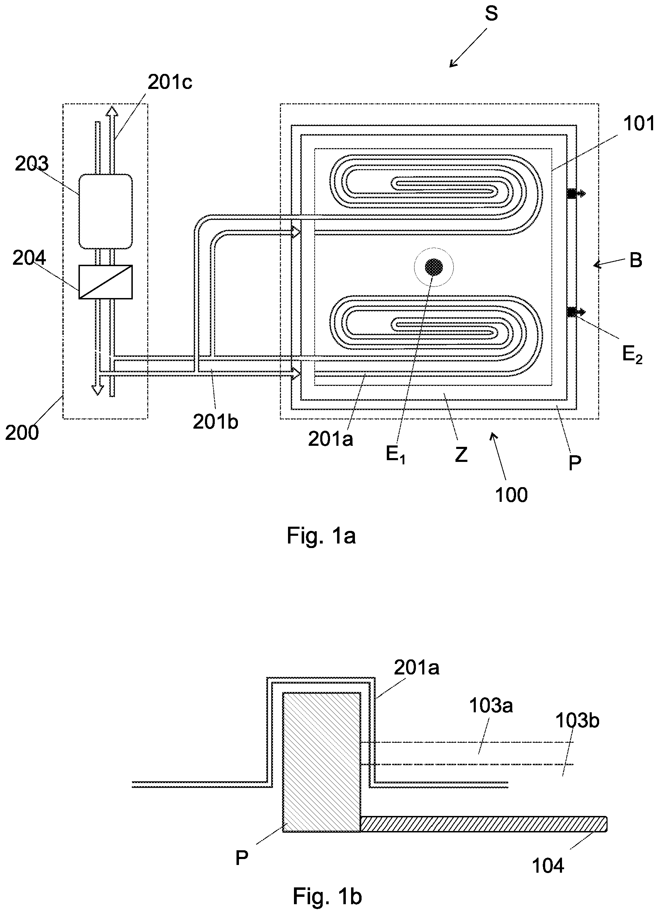

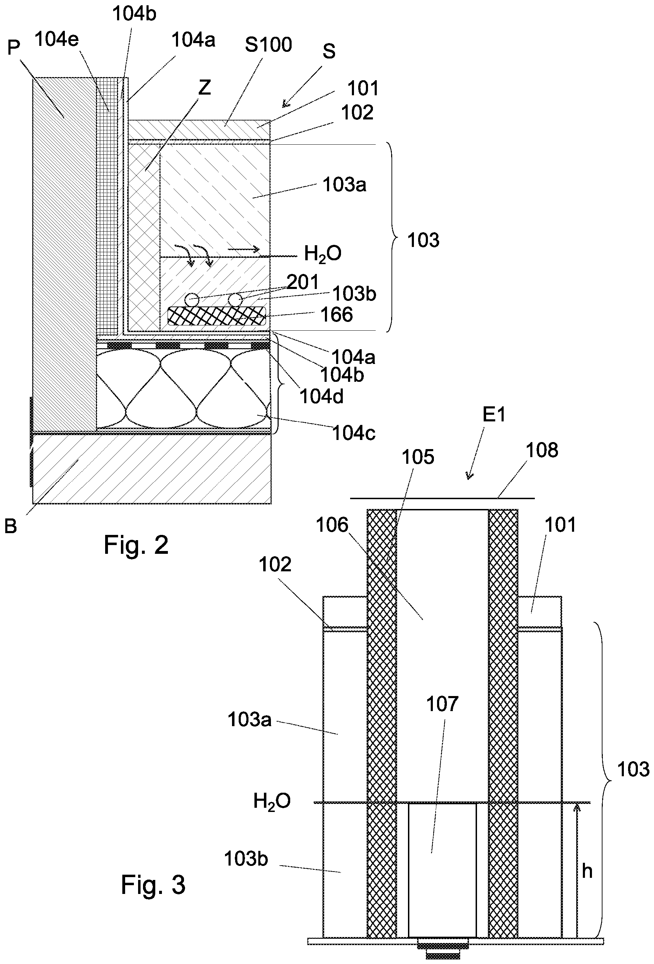

Avec référence aux figures 1a, 1b et 2, le système d'échange thermique **5** selon la présente invention comporte un volume d'échange **100** disposé sur la partie supérieure ou adjacente d'un bâtiment **B.** La partie supérieure ou adjacente d'un bâtiment s'entend comme toute surface approximativement horizontale en contact avec l'air libre, elle inclut le toit, une terrasse, ou toute autre partie recouvrant une surface du bâtiment **B.** Le bâtiment **B** inclut les bâtiments d'habitation, comprenant un ou plusieurs étages tels que 2, 3, 4, 5 étages ou plus, les commerces, ateliers, garages, entrepôts et toute autre construction nécessitant une régulation thermique.

Le volume d'échange **100** comporte une surface externe **S100** en contact avec l'air libre et permettant de moduler les échanges avec l'atmosphère. Les échanges avec l'atmosphère incluent par exemple la réception des rayonnements solaires directes et indirectes, la condensation et l'évaporation d'eau atmosphérique, la diffusion thermique, la collecte des eaux de pluie, l'évaporation de l'humidité présente dans le volume d'échange **100** et notamment l'évapotranspiration de l'humidité par les surfaces active de la végétation.

Le volume d'échange **100** comporte, sous la surface externe **S100,** un substrat **103** permettant de stocker l'énergie. Le substrat **103** comporte à cet effet des éléments macroporeux (structuraux), mésoporeux et/ou microporeux (texturaux) permettant de retenir une majeure partie de l'eau et limiter la circulation par convection, tout en permettant un certain drainage. Il peut par exemple contenir de la lignine, de la pouzzolane, de l'argile expansée, des alumino-silicates (p.ex. zéolite, perlite) ou tout autre matériau léger de texture mésoporeuse et/ou microporeuse permettant de retenir l'humidité. Il est important que le substrat **103** soit suffisamment léger pour ne pas compromettre la stabilité de la structure du bâtiment **B.** En plus, ces matériaux poreux sont composés d'éléments de faible conductivité thermique par rapport à l'eau qu'ils contiennent, et ils limitent les échanges thermiques par convection en emprisonnant l'eau dans leurs pores. Les propriétés physiques du substrat **103** permettent un important gradient de température entre la surface externe **S100** et la surface du bâtiment **B,** de telle sorte qu'en hiver, la partie inférieure du substrat **103** se trouve normalement hors-gel dans un climat tempéré.

Des matériaux minéraux tels que la terre, l'argile ou les graviers sont à cet effet trop lourds pour être utilisables sur de telles structures. Il est également important que le substrat **103** soit non-putrescible de manière à se maintenir dans le temps. Des matériaux totalement naturels, des matériaux composites ou des matériaux synthétiques peuvent être utilisés ainsi que le mélange de tels matériaux. Le substrat **103** peut être uniforme ou composé de plusieurs couches superposées de matériaux distincts. Les matériaux utilisés ne devraient pas altérer chimiquement ou physiquement les couches d'étanchéité sous-jacentes.

L'eau maintenue dans la porosité du substrat **103** sert de réservoir énergétique, en particulier du fait de sa capacité thermique élevée. Ce réservoir fonctionne comme source ou comme puit de chaleur suivant la saison ou le cycle thermique considéré. Lorsque les capacités maximales en eau du substrat **103** sont atteintes, l'eau reste sous forme libre dans la partie inférieure du volume d'échange **100.** La partie du substrat **103** alors immergée correspond à la partie saturée en eau **103b.** La partie du substrat **103** non immergée dans l'eau résiduelle correspond à la partie non saturée **103a.** La partie non saturée participe à la modulation des échanges avec l'atmosphère, notamment grâce à sa capillarité qui permet la migration de l'eau depuis la partie saturée **103b** vers la surface externe **S100.** De préférence, le substrat **103** est déterminé de manière à maintenir constant, ou approximativement constant, le gradient d'humidité entre la surface externe **S100** et la partie saturée **103b,** notamment lors de l'évaporation de l'eau par la surface externe **S100.** Avantageusement, le gradient d'humidité est maintenu quel que soit la quantité d'eau présente dans la partie saturée **103b,** et jusqu'à son assèchement complet. La hauteur du substrat et de la surface externe **S100** est dimensionné en sorte que, à saturation du volume **100,** la charge pondérale maximale déterminée par la structure du bâtiment ne soit pas dépassée.

La hauteur de la partie saturée **103b** peut être limitée au moyen d'un ou plusieurs dispositifs d'écoulement **E1, E2** prévus dans le système d'échange thermique **S.** La hauteur maximale peut être prédéterminée en fonction de paramètres météorologiques propres à l'endroit, tels que la fréquence et la quantité des précipitations, la quantité de condensation ou d'évaporation, et tout autre paramètre pertinent, l'objectif étant de maintenir une réserve d'énergie suffisante grâce à la partie saturée **103b.** Dans le cas où les apports naturels en eau seraient insuffisants, il peut être prévu une arrivée d'eau pouvant être activée de manière à préserver la partie saturée **103b.**

Un ou plusieurs dispositifs d'écoulement verticaux **E1,** disposés dans le substrat **103,** peuvent en outre ou alternativement être prévus. Selon un mode de réalisation illustré par la figure 3, le dispositif d'écoulement vertical **E1** est un tamis **105,** perméable à l'eau et résistant aux pressions latérales du volume **100.** Le tamis **105** a une forme creuse, par exemple cylindrique et renferme un espace libre **106** à son intérieur. Le tamis **105** peut prendre la forme d'un grillage fin, ou d'un matériau poreux ou de tout autre dispositif ayant des propriétés filtrantes, de manière à ne laisser passer que l'eau et conserver le reste des éléments du volume d'échange **100** sur le toit du bâtiment **B.** L'espace **106** est en équilibre hydrostatique avec l'eau maintenue dans le substrat **103.** Une conduite **107** permet l'écoulement de l'eau dès que le niveau dépasse la hauteur "h" de son bord supérieur. Le tamis cylindrique **105** peut être surmonté d'une plaque de protection **108.** Au besoin, la hauteur du bord supérieur de la conduite verticale peut être régulée manuellement, ou automatiquement par le biais d'une unité de commande **300,** en fonction de paramètres environmentaux.

Un ou plusieurs dispositifs d'écoulement de sécurité **E2,** disposés à la périphérie du volume d'échange **100,** peuvent être utilisés pour évacuer le trop-plein d'eau, lors d'événement pluviaux extrêmes permettant ainsi de ne pas dépasser la charge pondérale maximale.

Le système d'échange thermique **S** comporte en outre un dispositif de ségrégation **104** permettant d'isoler thermiquement le bâtiment **B** du substrat **103.** Le dispositif de ségrégation **104** est en particulier étanche à l'eau et à l'humidité. Il peut comprendre une ou plusieurs couches simples, ou une ou plusieurs multicouches. Le dispositif de ségrégation **104** comporte, dans l'exemple illustré, une ou plusieurs couches de revêtement étanche **104b,** tel que les revêtements couramment utilisés pour l'étanchéité des bâtiments. Le revêtement étanche **104b** peut être confectionné à base de matière goudronnée, ou bien de matière plastique imperméable ou d'autres matières équivalentes, soit seule soit en combinaison. Le choix du matériau est fait en considération des conditions d'acidité présentes dans la zone saturée **103b** du substrat. Le revêtement étanche **104b** peut comporter plusieurs couches d'un même matériau ou bien de matériaux distincts. L'épaisseur du revêtement étanche est de l'ordre de 1 à 10 millimètres, typiquement entre 2 et 6 mm.

Le revêtement étanche **104b** est avantageusement protégé par une couche protectrice **104a.** La couche protectrice **104a** protège le revêtement étanche **104b** d'éventuels impacts ou dégradations causés par le substrat **103.** Cette couche protectrice est notamment utile dans le cas où des éléments anguleux sont présents dans le substrat **103.** La couche de protection **104a** peut prendre la forme d'un feutre de protection de préférence non biodégradable. La couche de protection **104a** peut alternativement comprendre un matériau souple, semi-rigide ou rigide, ou une combinaison de tels matériaux. Une telle combinaison peut également inclure des plaques préfabriquées de drainage et de stockage d'eau placées sur une couche souple. L'épaisseur de la couche de protection **104a** est de l'ordre de 1mm à 10 cm, en particulier de l'ordre de 3 à 6 mm.

Le dispositif de ségrégation **104** est préférablement pourvu d'une couche thermiquement isolante horizontale **104c.** Toute matière isolante connue et couramment utilisée peut faire office de couche isolante horizontale **104c.** La couche isolante horizontale **104c** peut par exemple être une couche de polystyrène expansé, ou des panneaux de laines de roche ou de verre, ou de béton cellulaire. La couche isolante horizontale **104c** est disposée sous le revêtement étanche **104b** de manière à rester protégée de l'humidité. Une couche sous-jacente pare-vapeur **104d** peut être disposée sur la surface du toit du bâtiment **B.** Une couche superficielle pare-vapeur **104d** peut en plus ou alternativement être disposée sur la surface externe de la couche isolante horizontale **104c,** conformément aux pratiques usuelles. Chaque couche pare-vapeur a une épaisseur de l'ordre de quelques millimètres, typiquement 1 à 5 mm. L'épaisseur de la couche isolante horizontale **104c** est variable en fonction des objectifs d'isolation visés.

Les échanges thermiques entre l'intérieur du bâtiment **B** et le système d'échanges thermiques **5** s'effectuent au moyen d'un dispositif de diffusion thermique **200,** comprenant une ou plusieurs pompes et un ou plusieurs réseaux de conduites **201** ainsi que, préférablement, un échangeur de chaleur pour le fonctionnement en free-cooling **204.** En particulier, le dispositif de diffusion thermique **200** comporte un ou plusieurs réseaux de captage **201a** disposé dans le substrat **103** de sorte à faire circuler un fluide caloporteur à travers le volume d'échange **100.** Les conduites du réseau de captage **201a** peuvent être disposées en spirales, en serpentins, en lignes parallèles sur toute la surface d'échange **100,** selon un réseau maillé, selon une disposition circulaire, ou selon toute autre arrangement jugé pertinent par l'homme de métier. Le réseau de captage **201a** peut inclure, en lieu des conduites tubulaires représentées ou en combinaison avec celles-ci, des systèmes de circulation de fluide caloporteur plats, par exemple constituées par des plaques d'échange thermique à l'intérieur desquelles on peut établir une circulation complète de fluide caloporteur.

Plusieurs réseaux de captages **201a** peuvent être connectés en parallèle les uns aux autres par le biais de d'un distributeur de chaleur. Il est à noter que la densité de captage maximale du système d'échange **S,** en mètres de conduite par mètres carrés de surface, peut-être plus élevée que dans un système de captage plan de jardin. La densité et le nombre de conduites de captage et/ou les plaques d'échange thermique **201a** doivent être adaptés aux besoins et au mode de chauffage ou de refroidissement (monovalent, avec une seule source, ou bivalent, avec plusieurs sources d'énergie). Les conduites de captage et/ou les plaques d'échange thermique **201a** disposées dans le volume d'échange sont de préférence souples ou semi-rigides. Elles sont plus particulièrement disposées dans la partie saturée **103b** et sont arrimées à une armature flexible **166** posée à plat sur la couche de protection **104a.** Le réseau de captage **201a** forme de préférence un circuit fermé, thermiquement connecté au réseau interne **201c,** qui permet de faire circuler un autre fluide caloporteur à l'intérieur du bâtiment **B.** La connexion thermique entre le réseau de captage **201a** et le réseau interne **201c** peut par exemple s'effectuer au moyen d'un réseau externe **201b.**

Le fluide circulant dans les conduites de circulation **201** peut être de l'eau, éventuellement additivée d'antigel, tel que l'éthylène glycol, de composants anticorrosion, ou de fongicides ou de bactéricides, ou d'un mélange de tels composés. Alternativement le fluide peut être un autre liquide caloriporteur, ou caloporteur, couramment utilisé dans les systèmes de refroidissement ou de chauffage. Le fluide caloporteur qui circule dans le réseau de conduites internes **201c** est de préférence de l'eau.

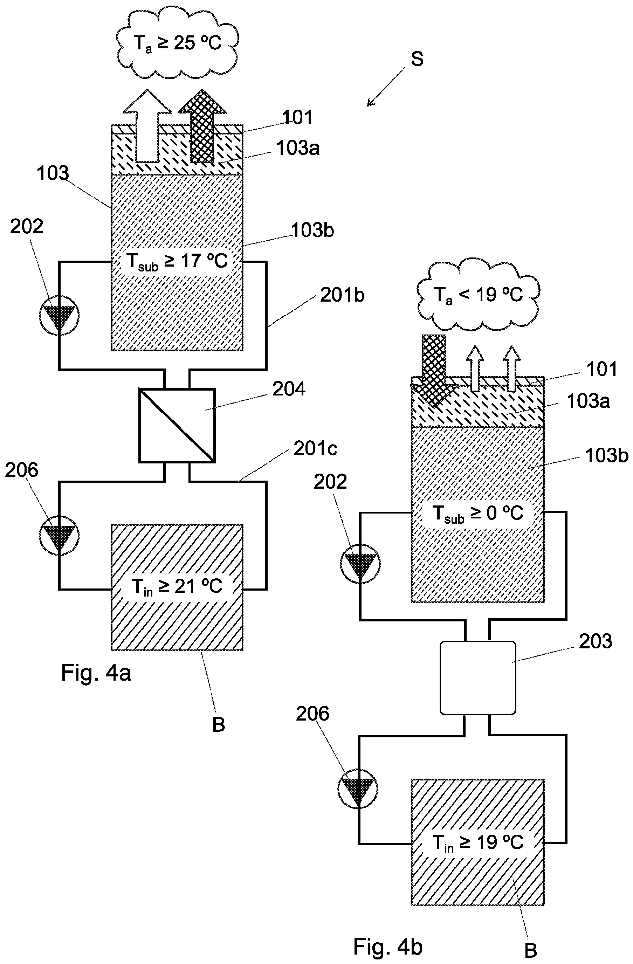

Le dispositif de diffusion thermique **200** de l'invention peut comprendre une pompe à chaleur **203** pour le fonctionnement en régime de chauffage ou de production d'eau chaude sanitaire, et/ou un échangeur de chaleur **204** pour le fonctionnement en régime de refroidissement "free-cooling". Les figures 4a et 4b illustrent ces configurations de fonctionnement. La commutation entre ces deux régimes de fonctionnement est préférablement faite par un ensemble de vannes automatiques à trois voies, non représentées.

Les conduites internes **201c** peuvent être disposées en thermosiphon, favorisant ainsi une libre circulation du fluide. Il peut être avantageux d'inclure un accélérateur ou une pompe de circulation **206** permettant d'activer la circulation du fluide. La circulation du fluide caloporteur dans le circuit externe **201b** est préférablement assurée par une pompe de circulation **202.**

Le régime de fonctionnement en "free-cooling" illustré par la figue 4a est préférablement activé lorsque la température extérieure Tₐ est supérieure à un seuil prédéterminé, par exemple 25 °C. En ces conditions, l'humidité du substrat **103** s'évapore. En plus, la couche de végétation muscinale **101,** ne possédant pas de stomates, transpire abondamment et fonctionne comme une pompe à chaleur inversée. Grâce à la perte de chaleur latente due à ce processus d'évapotranspiration bioactive, la température du substrat T_{sub} peut se trouver entre 6 et 9 °C plus basse que la température de l'air Tₐ, ce qui est suffisant pour rafraîchir le bâtiment, à travers l'échangeur de chaleur à plaques **204.**

Dans le régime de fonctionnement en chauffage illustré par la figure 4b, les mousses de la couche végétalisée **101,** fonctionnent comme noyau de condensation/gel/sublimation efficaces pour la récupération des apports d'énergie latente. La pluie, l'air ainsi que la structure externe du bâtiment sont d'autres sources de chaleur sensible non négligeables. En hiver, l'évapotranspiration est trop faible pour contrecarrer les apports.

Le substrat organique saturé en eau **103b** permet un stockage de chaleur en cycle nycthéméral (jour/nuit) et des températures de captage déphasée de la température de l'air extérieur, avec comme conséquences des performances nettement supérieures à un système aérothermique air/eau. Les pertes de chaleur par mouvements convectifs sont limitées par la porosité du substrat **103.** Les tuyaux de récupération de chaleur et/ou les plaques d'échange thermique placés entre 18 et 50 cm au-dessous de la surface ne gèlent en principe pas dans les conditions climatiques tempérées. On peut prévoir cependant des sécurités antigel dans des climats de montagne ou continentaux (typiquement avec une température de l'air moyenne négative pour le mois le plus froid), ainsi qu'une adaptation des conditions de pression et de température dans l'évaporateur du circuit compression-détente de la pompe à chaleur **203.**

II est à noter que le mode de fonctionnement en chauffage est actif en hiver et aussi, de façon intermittente en été pour la production d'eau chaude sanitaire. Durant les mois d'été la pompe à chaleur **203,** en puisant la chaleur du substrat **103b** va contribuer à baisser la température T_{sub} et maximise l'efficacité du système de refroidissement free-cooling de la figure 4a. La température élevée du substrat en été, permet de chauffer l'eau chaude sanitaire avec une efficacité supérieure à un système sol/eau avec sonde géothermique verticale.

Selon un mode de réalisation particulier, les pompes de circulation **202, 206,** la pompe à chaleur **203,** et les vannes nécessaires à la commutation entre refroidissement et réchauffement peuvent être connectés à une ou plusieurs sondes thermiques de manière à être activée automatiquement en cas de besoin, notamment lorsque les températures du volume d'échange **100** et/ou de l'intérieur du bâtiment **B** sont jugées adaptées à un échange thermique. L'activation de la pompe à chaleur et des pompes de circulation peut être assujettie à ces mesures de températures de sorte à ce que la température soit régulée de manière automatique.

Selon un autre mode de réalisation, les conduites internes **201c** ou externes **201b** sont connectées ou intégrées à un circuit traditionnel de chauffage ou de refroidissement. Elles peuvent être connectées à une ou plusieurs vannes permettant d'être mises en relation avec un circuit préexistant ou bien isolées d'un tel circuit. Un circuit préexistant peut par exemple être un circuit géothermique qu'il est nécessaire de compléter avec le système d'échange thermique objet de la présente invention, ou une installation de chauffage central traditionnelle, ou une installation de collecteurs solaires. La pompe à chaleur peut alors être mise en relation en mode bivalent avec un ou plusieurs autres réseaux thermiques au moyen d'une ou plusieurs vannes 3 voies ou 4 voies.

Se référant maintenant aux figures 2, 5 et 6, le volume d'échange **100** comprend avantageusement une ou plusieurs zones d'amortissement **Z** destinées à absorber les éventuelles variations de volume du substrat **103** dues notamment aux variations de température ou d'hygrométrie ou au gel dans des climats à température moyenne négative pour le mois le plus froid. La ou les zones d'amortissement **Z** peuvent par exemple s'étendre sur toute la périphérie du volume d'échange **100** ou sur une portion de cette périphérie. Alternativement ou en plus, une ou plusieurs zones d'amortissement **Z** peuvent être disposées dans le volume d'échange **100,** par exemple sous forme de lignes transversales espacées les unes des autres d'une distance prédéterminée, ou sous forme d'îlots.

La ou les zones d'amortissement **Z** comprennent des éléments élastiquement déformables **Z1** juxtaposés les uns aux autres. De tels éléments élastiquement déformables **Z1** peuvent comprendre par exemple des mousses synthétiques à cellules fermées non biodégradables telles que des mousses néoprène, nitrile butadiène ou Éthylène-acétate de vinyle. De préférence le polyuréthane n'est pas utilisé à cause des risques de réaction avec l'acidité du substrat **103.** Les éléments déformables **Z1** peuvent comprendre des cylindres creux, dont le diamètre intérieur correspond au tiers ou à la moitié, ou aux deux tiers du diamètre extérieur. De préférence le diamètre intérieur de chaque cylindre renfermant de l'air, correspond à la moitié du diamètre extérieur. La paroi des cylindres est étanche à l'eau. Les cylindres creux peuvent être simplement jouxtés ou bien associés les uns aux autres par des moyens de mise en contact et de maintien. Des mousses synthétiques peuvent être utilisées comme moyen de mise en contact et de maintien.

De manière à constituer la ou les zones d'amortissement **Z,** les éléments élastiquement déformables **Z1** peuvent être juxtaposés verticalement sur toute la surface couverte par ces zones d'amortissement **Z.**

Les éléments déformables **Z1** peuvent avoir la hauteur du substrat **103** de manière à pouvoir être recouverts par la surface externe **5100,** en particulier si la surface externe **S100** est une couche végétalisée **101** comprenant optionnellement un dispositif anti-racine **102.** Alternativement, ils peuvent avoir une hauteur inférieure à celle du substrat **103,** correspondant par exemple à la hauteur de la partie saturée **103b.** Les effets de dilatation, dû au gel par exemple, sont ainsi neutralisés. Alternativement, dans le cas d'un substrat **103** hétérogène comprenant plusieurs couches, la hauteur des éléments déformables **Z1** peut coïncider avec l'épaisseur d'une ou plusieurs couches du substrat **103.** Les éléments déformables **Z1** peuvent être disposés directement sur le dispositif de ségrégation **104.** La ou les zones d'amortissement **Z** ont une largeur comprise de préférence entre 5 et 30 cm, en fonction de leur nombre et de la surface couverte par la surface d'échange. Plus particulièrement la largeur des zones d'amortissement **Z** est comprise entre 15 et 20 cm.

Le volume d'échange **100** est de préférence délimitée par un parapet **P,** qui peut s'inscrire, par exemple, dans le prolongement en hauteur des murs du bâtiment **B.** D'autres dispositions particulières peuvent bien sûr être envisagées sans préjudice de la présente invention, comme par exemple un parapet posé en retrait par rapport à la bordure du toit. Le parapet **P** peut comprendre un bardage métallique, en béton, composite ou en bois. Alternativement, le parapet **P** est la simple prolongation verticale des murs du bâtiment **B.** Le parapet **P** surpasse le volume d'échange **100** de manière à le contenir. Le parapet **P** est de préférence un bardage fixé sur une armature depuis l'extérieur du bâtiment **B,** de manière à pouvoir être facilement retiré ou remplacé. Il peut faire office de deuxième niveau de sécurité (non élastique) dans l'hypothèse d'un événement improbable de gel extrême qui se traduirait par une dilatation du volume de glace non-homogène sur toute la surface d'échange.

De manière optionnelle, une couche isolante verticale **104e** (visible sur la figure 2) peut être insérée le long du parapet **P,** sur sa partie interne. La couche isolante verticale **104e** peut être revêtue d'un revêtement étanche **104b** et d'une couche protectrice **104a,** qui peuvent être distinctes des couches correspondantes disposées horizontalement entre le volume d'échange **100** et le bâtiment **B.** De préférence, les couches de revêtement étanche **104b** et de protection **104a** disposées verticalement le long du parapet **P** ou le cas échéant de la couche isolante verticale **104e,** sont confondues aux couches de revêtement étanche **104b** et de protection **104a** disposées horizontalement entre le volume d'échange **100** et le bâtiment **B,** de manière à garantir une étanchéité maximale.

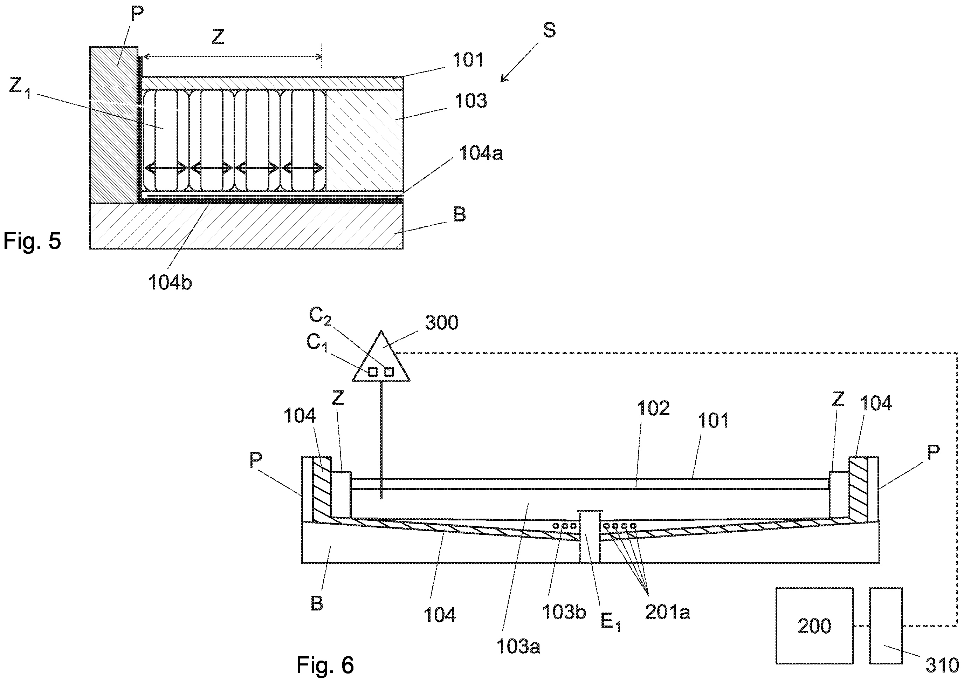

La ou les zones d'amortissement **Z** peuvent être disposées entre le parapet **P** et, le cas échéant, la couche isolante verticale **104e.** Alternativement, comme illustré dans les figures 2 et 5, la zone d'amortissement est disposée entre le substrat **103** et la couche isolante verticale **104e.**

Le parapet **P,** la couche isolante verticale **104e** et les couches de revêtement étanche **104b** et de protection **104a,** peuvent être surmontées d'un profilé métallique qui les protège des intempéries et des rayonnements UV qui pourraient à la longue altérer ces éléments. Le passage du circuit du réseau de captage **201a** (ou du réseau externe **201b**) est préférablement réalisé par un coude en U (visible sur la figure 1b) plutôt que par des connexions traversantes.

Le volume d'échange **100** peut optionnellement comprendre des évidements pour permettre le passage de conduites d'évacuation d'air ou l'installation de dispositifs particuliers tels que des aérateurs, des ventilateurs, des socles d'encrage pour panneaux solaires ou tout autre dispositif couramment fixé sur les toits. Des zones d'amortissement Z peuvent être prévues à l'emplacement de ces dispositifs.

Selon l'invention, illustré par la figure 6, la surface externe **S100** comporte une couche végétalisée **101** en contact avec l'environnement extérieur. La couche végétalisée **101** peut comprendre diverses espèces végétales de type muscinal connues pour couvrir la surface sur laquelle elles sont disposées. De telles espèces peuvent comprendre par exemple, les mousses, les lichens, et toute autre espèce couvrante, ainsi que leurs mélanges. Les espèces privilégiées sont celles dont la hauteur reste limitée, de manière à restreindre les opérations d'entretien telles que la taille ou la tonte, ou de manière à limiter l'ombrage porté sur une éventuelle installation de panneaux photovoltaïques ou de collecteurs solaires. Les espèces végétales robustes sont de préférence sélectionnées, notamment pour leur résistance aux longues périodes sèches, de manière à s'affranchir de tout dispositif d'arrosage, même si de manière optionnelle un tel dispositif peut être prévu.

La couche végétalisée **101** inclut en particulier les mousses et autres espèces associées. Ces variétés couvrantes et résistantes aux périodes sèches, nécessitent peu d'entretien. Ces variétés ont en plus la caractéristique de ne pas contenir de stomates, contrairement à la plupart des autres espèces végétales. L'évapotranspiration n'est donc pas limitée en période chaude, ce qui contribue à rafraîchir la surface sur laquelle la couche végétalisée **101** est disposée. L'évapotranspiration de la couche végétalisée **101** participe à la modulation active des échanges avec l'environnement extérieur.

Le volume d'échange **100** comporte avantageusement dans ce cas un dispositif anti-racine **102.** Un tel dispositif anti-racine **102** peut prendre la forme d'une couche de matériaux résistante à la perforation, perméable à l'eau et non biodégradable, disposée sous la couche végétalisée **101** de manière à empêcher l'enracinement d'espèces végétales non désirées. Il se peut en effet que des variétés aux racines profondes croissent de manière non contrôlée et détériorent le système de régulation thermique S ou même les éléments connexes comme le bâtiment **B** ou certains de ses constituants. Le dispositif anti-racine **102** empêche sélectivement l'enracinement des plantes vasculaires, sans limiter le développement des mousses et des plantes muscinales qui n'ont pas de racines. Le matériau utilisé peut être, par exemple, un géotextile confectionné à base de polymères naturels ou synthétiques. Le dispositif anti-racine **102** peut alternativement comprendre un géomatelas ou tout autre élément poreux et non biodégradable susceptible d'empêcher ou de retarder l'enracinement d'espèces végétales. De préférence le dispositif anti-racine **102** est inclus dans le substrat **103** à une distance de la surface externe **S100** comprise entre quelques millimètres et 1 ou 2 centimètres. Alternativement, le dispositif anti-racine **102** est disposé à la surface du substrat **103.** Selon cette disposition, le dispositif anti-racine **102** permet néanmoins le développement d'une couche végétalisée **101.** Sa porosité peut notamment être suffisamment grande pour accueillir des mousses.

Les espèces végétales de type muscinal n'ont pas un système de racines pour extraire activement du sol les éléments nutritifs nécessaires à leur sustentation et à leur croissance : leurs rhizoïdes ont principalement une fonction d'ancrage. L'apport en éléments nutritifs par les précipitations est en règle générale suffisant pour le développement de la couche de végétation muscinale et aucun enrichissement du substrat n'est requis. Au contraire, les espèces muscinales visées s'avantagent de substrats pauvres en éléments nutritifs, avec un pH neutre à acide. Avec ce type de substrat, de surcroit, tout risque de pollution des eaux grises est exclu.

L'épaisseur du substrat **103,** du dispositif anti-racine **102** et de la couche végétalisée **101** est préférentiellement de l'ordre de 10 à 50 cm, plus particulièrement de l'ordre de 15 à 20 cm. La hauteur de la partie saturée **103b** est de l'ordre de quelques centimètres, typiquement entre 3 et 15 cm. La hauteur du volume de la partie saturée **103b** peut être conçu pour correspondre au tiers, ou à la moitié, ou aux deux tiers de la hauteur du substrat **103** en fonction des besoins. Dans le cas d'écoulements verticaux centraux sur la surface du bâtiment avec des légères pentes dirigées vers ces écoulements, le niveau de la partie saturée peut-être prévue de telle sorte qu'il arrive 1-2 cm en-dessous de la jointure entre la surface du dispositif de ségrégation **104** et le parapet **P,** afin d'éviter toute possibilité de pression due à la l'augmentation du volume d'eau suite au gel. Dans ce cas, la zone d'amortissement n'est pas forcément nécessaire, car la zone drainée qui est en contact avec les parapets, est à même d'absorber les mouvements de dilatations.

De manière optionnelle, le système d'échange thermique **5** selon la présente invention peut comprendre ou être connecté à une installation **300** comprenant un ou plusieurs capteurs **C1, C2,** lesquels permettent de déterminer un ou plusieurs paramètres environnementaux tels que l'hygrométrie, la température, le vent, l'ensoleillement, et tout autre paramètre environnemental pouvant influencer l'état du substrat **103,** et en particulier de la partie saturée **103b.** Les données peuvent être transmises via une connexion filaire ou une connexion sans fil à une unité centrale de commande **310** comprenant les moyens nécessaires au traitement des données et à la détermination des conditions optimales relatives aux échanges thermiques entre l'intérieur du bâtiment **B** et le système d'échange thermique **S.** Alternativement, les données environnementales peuvent être transmises depuis une station météo ou un centre de mesures distant du bâtiment **B.** Le traitement des données peut inclure leur enregistrement et l'apprentissage d'un programme d'intelligence artificielle permettant de déterminer les paramètres d'échanges thermiques entre l'intérieur du bâtiment **B** et le système d'change thermique **S.**

La présente invention couvre en outre une méthode de régulation thermique comportant une étape d'évaporation de l'eau de manière à refroidir un substrat **103** tel que décrit plus haut. Le refroidissement du substrat **103** s'effectue notamment grâce à la l'évapotranspiration d'une couche végétalisée **101** soigneusement sélectionnée. Les espèces végétales sont en particulier sélectionnées parmi celles dépourvues de moyen de régulation de leur transpiration, et en particulier dépourvues de stomates. Les espèces muscinales telles que les mousses ou les lichens sont alors particulièrement adaptées.

La méthode selon la présente invention permet une régulation thermique active grâce au volume d'échange **100** décrite ci-dessus.

Le système de chauffage et refroidissement de la présente invention exploite en particulier les apports d'énergie latente de condensation pour le chauffage, les déperditions d'énergie latente d'évaporation pour le refroidissement, ainsi que l'inertie thermique de l'eau. L'invention est basée sur des modes monovalents d'énergie renouvelable et peut également être combinée en mode bivalent à une installation thermique traditionnelle. Elle permet de chauffer l'intérieur du bâtiment, de le refroidir, et d'alterner les modes de chauffage et de refroidissement de manière synergétique.

### Numéros de référence employés sur les figures

- 100: volume d'échange
- 101: couche végétalisée
- 102: dispositif anti-racines
- 103: substrat
- 103a: partie non saturée
- 103b: partie saturée
- 104: dispositif de ségrégation
- 104a: couche protectrice
- 104b: revêtement étanche
- 104c: couche isolante horizontale
- 104d: pare-vapeur
- 104e: couche isolante verticale
- 105: tamis
- 106: espace libre
- 107: conduite verticale
- 108: plaque de protection
- 166: armature flexible
- 200: dispositif de diffusion thermique
- 201: conduite de circulation
- 201a: réseau de captage
- 201b: réseau externe
- 201c: réseau interne
- 202: pompe de circulation
- 203: pompe à chaleur
- 204: échangeur de chaleur free-cooling
- 206: pompe de circulation
- 300: unité de commande
- 310: centrale de commande
- B: bâtiment
- C1: capteur
- C2: capteur
- E1: dispositif d'écoulement vertical
- E2: dispositif d'écoulement de sécurité
- P: parapet
- S: système d'échange thermique
- S100: surface externe
- Z: zone d'amortissement
- Z1: éléments déformables

## Revendications

1. Système d'échange thermique (S) permettant la régulation thermique à l'intérieur d'un bâtiment (B), comprenant un volume d'échange (100) configuré pour être disposé sur une surface extérieure approximativement horizontale superposée ou adjacente du bâtiment (B), et un réseau de captage (201a) intégré au volume d'échange (100) pour capter la chaleur, **caractérisé en ce que** le volume d'échange (100) comporte une surface externe (5100) en contact avec l'atmosphère et un substrat poreux (103) permettant de retenir l'eau, et **en ce que** la surface externe (S100) est une couche végétalisée (101) de type muscinal.

2. Système selon la revendication 1, **caractérisée en ce que** le substrat (103) comporte une partie non saturée (103a) et une partie saturée (103b) sous-jacente à la partie non saturée (103a).

3. Système selon l'une quelconque des revendications précédentes, avec un dispositif de diffusion thermique (200) comportant une pompe de circulation (202).

4. Système selon la revendication précédente, **caractérisé en ce que** le dispositif de diffusion thermique (200) comporte une pompe à chaleur (203) et/ou à un échangeur de chaleur (204).

5. Système selon l'une quelconque des revendications précédentes, **caractérisé en ce qu'**il comprend un ou plusieurs capteurs (C1, C2) permettant de déterminer un ou plusieurs paramètres environnementaux et une unité de commande (300) permettant de traiter les données recueillies et de piloter le système d'échange thermique (S).

6. Système selon l'une quelconque des revendications précédentes, **caractérisé en ce que** le volume d'échange (100) comprend en outre une ou plusieurs zones d'amortissement (Z) comportant des éléments déformables.

7. Système selon l'une quelconque des revendications précédentes, **caractérisé en ce qu'**il comprend un parapet (P) disposé à la périphérie du volume d'échange (100), et dont la hauteur surpasse celle du volume d'échange (100) de manière à le contenir.

8. Système selon la revendication précédente, **caractérisé en ce que** le parapet (P) est configuré pour être fixé sur le bâtiment depuis sa périphérie extérieure, de sorte à pouvoir être aisément remplacé ou réparé.

9. Procédé de régulation thermique d'un bâtiment (B) avec l'environnement extérieur, **caractérisé en ce que** les échanges thermiques s'effectuent à travers un système d'échange thermique (S) tel que décrit dans les revendications 1 à 9.

## Patentansprüche

1. Wärmeaustauschsystem (S), welches eine thermische Regulierung innerhalb eines Gebäudes (B) ermöglicht, bestehend aus einem Austauschvolumen (100), das konfiguriert ist, um auf einer annähernd horizontalen über oder neben dem Gebäude (B) gelagerten Aussenfläche angeordnet zu werden, und einem im Austauschvolumen (100) integrierten Sammelnetz (201a) zum Wärmeauffangen, **dadurch gekennzeichnet, dass** das Austauschvolumen (100) eine Aussenfläche (S100) in Kontakt mit der Atmosphäre und ein poröses Substrat (103) umfasst, welches die Rückhaltung von Wasser ermöglicht, und dass die Aussenfläche (S100) eine bewachsene Schicht (101) vom moosartigen Typ ist.

2. System gemäss Anspruch 1, **dadurch gekennzeichnet, dass** das Substrat (103) einen ungesättigten Teil (103a) und einen gesättigten Teil (103b) umfasst, welcher unter dem ungesättigten Teil (103a) darunterliegt

3. System gemäss irgendeinem der vorhergehenden Ansprüche, mit einer Wärmediffusionsvorrichtung (200), welche eine Umwälzpumpe (202) umfasst

4. System gemäss dem vorhergehenden Anspruch, **dadurch gekennzeichnet, dass** die Wärmediffusionsvorrichtung (200), welche eine Wärmepumpe (203) und/oder einen Wärmetauscher (204) umfasst.

5. System gemäss einem der vorhergehenden Ansprüche, **dadurch gekennzeichnet, dass** es einen oder mehrere Sensoren (C1, C2) umfasst, welche die Bestimmung eines oder mehrerer Umgebungsparameter ermöglichen, und eine Steuereinheit (300), welche die Verarbeitung der gesammelten Daten und die Steuerung des/der Wärmeaustauschsystems/- systeme (S) ermöglicht.

6. System gemäss einem der vorhergehenden Ansprüche, **dadurch gekennzeichnet, dass** das Austauschvolumen (100) zudem eine oder mehrere Dämpfungszonen (Z) umfasst, welche verformbare Elemente umfassen.

7. System gemäss einem der vorhergehenden Ansprüche, **dadurch gekennzeichnet, dass** es eine Brüstung (P) umfasst, welche konfiguriert ist, um am Gebäude an der Peripherie des Austauschvolumens (100) angebracht zu werden, und deren Höhe diejenige des Austauschvolumens (100) übersteigt, um es aufzunehmen.

8. System gemäss dem vorhergehenden Anspruch, **dadurch gekennzeichnet, dass** die Brüstung (P) von ihrem Aussenumfang her am Gebäude befestigt ist, so dass sie leicht ausgetauscht oder repariert werden kann.

9. Verfahren zur thermischen Regulierung eines Gebäudes (B) mit der Aussenumgebung, **dadurch gekennzeichnet, dass** der Wärmeaustausch über ein wie in den Ansprüchen 1 bis 9 beschriebenen Wärmeaustauschsystem (S) erfolgt.

## Claims

1. A heat exchange system (S) which enables the thermal regulation inside a building (B), comprising an exchange volume (100) which is configured to be arranged on an approximately horizontal external surface which is superimposed on or adjacent to the building (B), a collection network (201a) which is integrated in the exchange volume (100) to receive heat, **characterized in that** the exchange volume (100) comprises an external surface (5100) in contact with the atmosphere, and a porous substrate (103) which enables water to be retained, and **in that** the external surface (5100) is a vegetated layer (101) of the muscoid type.

2. The system as claimed in claim 1, **characterized in that** the substrate (103) comprises a non-saturated portion (103a) and a saturated portion (103b) which is subjacent to the non-saturated portion (103a).

3. The system as claimed in either of the preceding claims, having a heat diffusion device (200) comprising a circulation pump (202).

4. The system as claimed in the preceding claim, **characterized in that** the heat diffusion device (200) comprises a heat pump (203) and/or a heat exchanger (204).

5. The system as claimed in one of the preceding claims, **characterized in that** it comprises one or more sensors (C1, C2) which enable one or more environmental parameters to be determined and a control unit (300) which enables the data collected to be processed and enables the heat exchange system(s) to be controlled.

6. The system as claimed in one of the preceding claims, **characterized in that** the exchange volume (100) further comprises one or more damping zones (Z) which comprise deformable elements.

7. The system as claimed in one of the preceding claims, **characterized in that** it comprises a parapet (P) which is configured to be affixed to the building on the periphery of the exchange volume (100) and whose height exceeds that of the exchange volume (100) in order to contain it.

8. The system as claimed in the preceding claim, **characterized in that** the parapet (P) is fixed to the building from the external periphery thereof in order to be able to be readily replaced or repaired.

9. A method of thermal regulation of a building (B) with the external environment, **characterized in that** the heat exchanges are carried out via a heat exchange system (S) as described in claims 1 to 9.
